**Europäisches Patentamt**

**European Patent Office**

**Office européen des brevets**

(19)

(11) Veröffentlichungsnummer : **0 081 799
B1**

(12)    **EUROPÄISCHE PATENTSCHRIFT**

(45) Veröffentlichungstag der Patentschrift :
04.05.88

(21) Anmeldenummer : 82111333.9

(22) Anmeldetag : 07.12.82

(51) Int. Cl.⁴ : **H 04 M    3/56**

(54) Verfahren und Schaltungsanordnung zum Herstellen einer Konferenzverbindung.

(30) Priorität : 10.12.81 DE 3148886

(43) Veröffentlichungstag der Anmeldung :
22.06.83 Patentblatt 83/25

(45) Bekanntmachung des Hinweises auf die Patenterteilung : 04.05.88 Patentblatt 88/18

(84) Benannte Vertragsstaaten :
AT CH DE FR GB LI NL SE

(56) Entgegenhaltungen :
EP-A- 0 021 710
WO-A-79 /003 17
FR-A- 2 332 663
US-A- 3 937 898

(73) Patentinhaber : ALCATEL N.V.
Strawinskylaan 537 (World Trade Center)
Amsterdam (NL)
CH FR GB LI NL SE AT
Standard Elektrik Lorenz Aktiengesellschaft
Hellmuth-Hirth-Strasse 42
D-7000 Stuttgart 40 (DE)
DE

(72) Erfinder : Eschmann, Joachim
Neuhaldenstrasse 26/1
D-7015 Korntal (DE)
Erfinder : Zanzig, Jürgen
Blammerbergstrasse 39
D-7252 Weil-der-Stadt (DE)

(74) Vertreter : Beck-Seyffer, Karl Heinz, Dipl.-Ing. et al
Standard Elektrik Lorenz AG Patent- und Lizenzwesen Postfach 30 09 29
D-7000 Stuttgart 30 (DE)

## Beschreibung

Die Erfindung betrifft ein Verfahren zum Herstellen einer Konferenzverbindung in einer digitalen Fernsprechvermittlungsanlage, wobei nichtlinear codierte Sprachproben in linear codierte Sprachproben umgesetzt, addiert und anschließend wieder in nichtlinear codierte Sprachproben umgesetzt werden, sowie eine Schaltungsanordnung zum Durchführen eines solchen Verfahrens.

Es ist bereits eine Schaltungsanordnung zum Herstellen einer Konferenzschaltung in einer digitalen Vermittlungsanlage bekannt (FR-A-2 332 663), in der nichtlinear codierte Sprachproben in linear codierte Sprachproben umgewandelt, addiert und anschließend wieder in nichtlineare Sprachproben umgesetzt werden. Dazu ist eine Dämpfungseinheit zwischen ein Eingangsregister und ein Ausgangsregister auf der einen Seite und einer Verarbeitungseinheit auf der anderen Seite geschaltet. Die Dämpfungseinheit weist eine Spracherkennungseinheit auf, die in Abhängigkeit einer für einen Zeitraum vorgegebenen Amplitudenschwelle beim Unterschreiten oder Überschreiten der Schwelle entsprechende logische Signale abgibt. Dadurch werden Sprachproben des oder der sprechenden Konferenzteilnehmer, die die Schwelle überschreiten, ohne Dämpfung und die die Schwelle unterschreiten mit einer vorgegebenen Dämpfung weitergeleitet.

Weiterhin ist eine digitale Konferenzschaltung für eine deltamodulierte Fernsprechvermittlungsstelle bekannt (US-A-3 397 898), die eine Konferenzbrücke aufweist, die je Konferenzteilnehmer einen als dreistufiges Schieberegister ausgebildeten Datenspeicher und einen Detektor enthält. Jeder Detektor untersucht die in die Schieberegister eingelesenen Sprachproben auf drei aufeinanderfolgende Bit des gleichen Wertes, wodurch die Sprachaktivität eines Konferenzteilnehmers gekennzeichnet ist. Falls drei gleiche Bits erkannt werden, wird ein zugeordneter Zähler um eins erhöht. Eine nachgeschaltete Erkennungsschaltung vergleicht die Zählerstände, erkennt den dem größten Zählerstand zugeordneten Sprecher als aktiv, und setzt alle Zähler wieder auf Null zurück.

Da in der digitalen Fernsprechvermittlungstechnik, insbesondere in der PCM-Technik, die Sprachsignale der Fernsprechteilnehmer zur Verbesserung der Übermittlungsqualität nach einer nichtlinearen — angenähert logarithmischen — Codierkennlinie in Digitalwerte codiert und auf der Empfangsseite nach einer entsprechenden Kennlinie wieder zu analogen Sprachsignalen decodiert werden, kann eine Konferenzverbindung, d. h. eine Verbindung zwischen mehr als zwei Teilnehmern, nicht durch einfache Addition der digitalisierten Sprachproben der Teilnehmer hergestellt werden (DE-AS 1 803 222).

Bei einem bekannten derartigen Verfahren (DE-AS 2 445 094) werden die Sprachproben, nachdem sie nach einer nichtlinearen Kennlinie in PCM-Worte mit z. B. 8 Bit umcodiert worden sind, in einem Nichtlinear-Linear-Codeumsetzer in PCM-Worte mit z. B. 16 Bit umgewandelt. Dadurch ergibt sich zwischen dem positiven und dem negativen Bereich der Sprachproben ein freibleibender Restbereich, der dazu führt, daß bei einer im Rahmen der Konferenzverbindung durchgeführten Addition mehrerer eine größere richtungsgleiche Amplitude aufweisender Sprachproben der zulässige Amplitudenbereich beim Bilden von Zwischensummen überschritten werden darf. Verzerrungen der Sprachsignale können aber nur dann vermieden werden, wenn die Gesamtsumme der Sprachproben aller Teilnehmer den zulässigen Amplitudenbereich nicht überschreitet, d. h. nicht in dem freibleibenden Restbereich des für die Zwischensummen zulässigen erweiterten Zahlenbereichs liegt. Liegt auch die Gesamtsumme der Sprachproben in dem freibleibenden Restbereich, ist der zulässige Amplitudenbereich überschritten worden und die Sprachprobe wird bei der nachfolgenden Linear-Nichtlinear-Codeumsetzung auf den maximal zulässigen positiven oder negativen Wert begrenzt. Dies hat eine Verzerrung des vor der Abgabe an den Empfänger wiederherzustellenden analogen Sprachsignals zur Folge.

Der Erfindung liegt die Aufgabe zugrunde, ein Verfahren und eine Schaltungsanordnung zum Herstellen von Konferenzverbindungen zu schaffen, die zu einer möglichst geringen Verzerrung der Sprachsignale führt.

Diese Aufgabe wird verfahrensmäßig durch die Merkmale des ersten Patentanspruchs und schaltungsmäßig durch die Merkmale des fünften Patentanspruchs gelöst. Besondere Ausgestaltungen des Verfahrens sind in den Patentansprüchen 2 bis 4 und besondere Ausgestaltungen der Schaltungsanordnung sind in den Patentansprüchen 6 bis 9 gekennzeichnet.

Die Vorteile der Erfindung liegen insbesondere darin, daß mit ihr das Nutz-/Störsignalverhältnis verbessert wird. Außerdem wird die bei einer vierdrähtigen Übertragung mit Verstärkung der Sprachsignale erforderliche Umlaufdämpfung eingehalten, ohne daß dabei die Einfügungsdämpfung erhöht wird. Die Stabilität und die Echoverhältnisse, die durch die die Vierdrahtstrecken abschließenden Gabeln bedingt sind, werden verbessert, der Klirrfaktor wird erniedrigt.

Ein Ausführungsbeispiel der Erfindung wird im folgenden anhand der Zeichnung erläutert. Es zeigen:

Fig. 1 eine erfindungsgemäße Schaltungsanordnung in Blockdiagrammdarstellung und

Fig. 2 eine Ablaufsteuerung für die Schaltungsanordnung nach Fig. 1, in schematischer Darstellung.

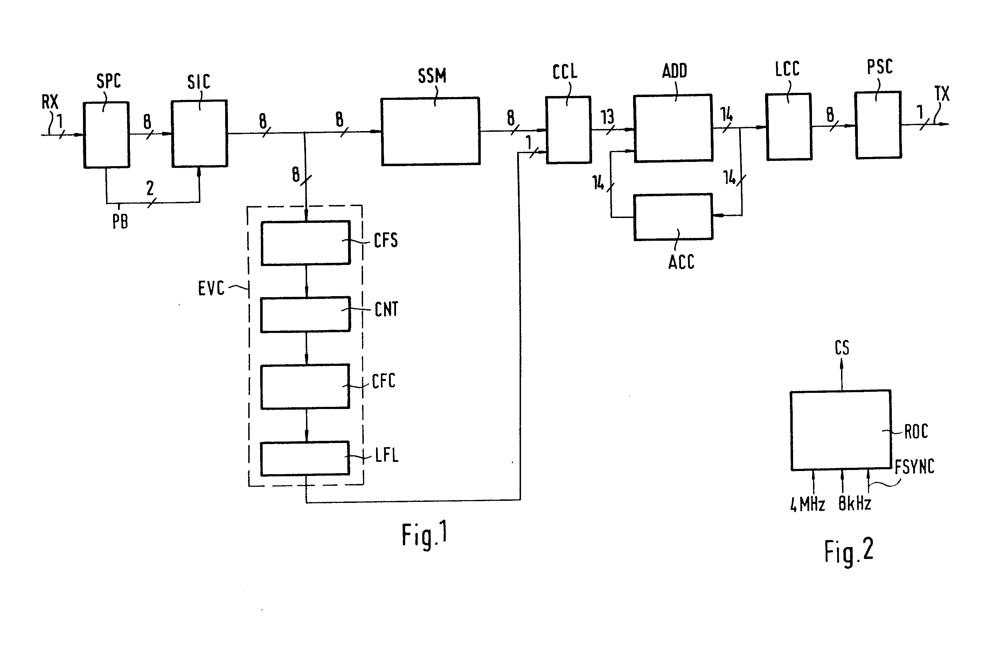

Die aus Figur 1 ersichtliche Konferenzschaltung ist über eine in der Zeichnung nicht dargestellte Anschalteeinheit an das Koppelnetz einer PCM-Vermittlungsstelle angeschlossen. Über eine Empfangsleitung RX gelangt ein serieller Bitstrom von dem Koppelnetz zu der Konferenzschaltung. Von der Konferenzschaltung gelangt der abgehende serielle Bitstrom über eine Sendeleitung TX wiederum zu dem Koppelnetz.

Wie bei PCM-Zeitmultiplexvermittlungsanlagen üblich ist der ankommende Bitstrom in 32 Kanäle oder Zeitschlitze pro Rahmen unterteilt, wobei ein Rahmen 256 Bit aufweist. Jede Sprachprobe, d. h. jeder Abtastwert des Sprachsignals, ist in einem PCM-Wort mit 8 Bit codiert, woraus sich 256 Quantisierungsstufen ergeben. Die Abtastfrequenz beträgt 8 kHz. Von den 32 Kanälen sind 30 Nutzkanäle, während der Kanal Nr. 0 der Rahmensynchronisierung dient und der Kanal Nr. 16 für Betriebssignale zur Verfügung steht. In einem Ausführungsbeispiel ist eine erfindungsgemäße Schaltungsanordnung in der Lage, sechs voneinander unabhängige Konferenzgruppen mit jeweils bis zu fünf Teilnehmern zu bilden.

Jeder Teilnehmer erhält die Summen der Sprachproben der anderen Teilnehmern, wobei die Addition der PCM-Sprachproben in linear codierter Form erfolgt. Bei n Teilnehmern an einer Konferenz werden von der Konferenzschaltung n verschiedene Additionen von jeweils n-1 Sprachproben durchgeführt.

Die Sprachproben werden in noch zu beschreibender Weise zeitlich integrierend bewertet und die Sprachproben desjenigen Teilnehmers, der auf Grund dieser Bewertung als lautester Teilnehmer ermittelt wird, werden ungedämpft der Addition zugeführt, während die Sprachpegel aller anderen Teilnehmer mit 12 dB bedämpft der Addition zugeführt werden.

Der über die Empfangsleitung RX ankommende serielle Bitstrom gelangt zu einem Seriell/Parallel-Wandler SPC und von diesem in Form von jeweils 8 parallelen Bits zu einer Unterdrückungsschaltung SIC. Über eine Leitung PB gelangen die das Bitformat eines jeden Kanals darstellenden zwei Protokollbits von dem Wandler SPC zu der Unterdrückungsschaltung SIC, die durch Prüfung der Bitformate unbelegte Kanäle feststellt und diese für die weitere Bearbeitung unterdrückt.

Von der Unterdrückungsschaltung SIC gelangen die — jeweils eine Sprachprobe darstellenden — 8-Bit-Worte einerseits zu einem Sprachprobenspeicher SSM, in dem sie zwischengespeichert werden, und andererseits zu einer Bewertungsschaltung EVC. In einem ersten Komparator oder Sprachprobenvergleicher CFS werden die Sprachproben gruppenweise, d. h. sämtliche Sprachproben einer Konferenz, miteinander verglichen. Jedem Kanal und damit jedem Konferenzteilnehmer ist ein Zähler CNT zugeordnet, von denen in der Zeichnung aber nur ein Zähler dargestellt ist. Nach jedem Vergleich der Sprachen einer Konferenzgruppe wird der Zähler, der dem als lautesten ermittelten Teilnehmer zugeordnet ist, ume ins erhöht, während die den anderen Teilnehmern zugeordneten Zählern CNT um eins verringert werden. Die Zähler CNT zählen von 0 bis 63. Es dauert somit höchstens 32 Rahmen — d. h. 32 × 125 μs = 4 ms — bis ein Zähler, der dem lautestsprechenden Teilnehmer zugeordnet ist, den Zähler eines anderen Teilnehmers, der vorher der lauteste war, überholt hat. In diesem Grenzfall muß also ein Teilnehmer während 32 Rahmen die Sprachproben mit der höchsten Intensität liefern.

Um den Teilnehmer, dessen Sprachproben die höchste Intensität aufweisen, d. h. den lautesten Teilnehmer, zu ermitteln, werden die Zählerstände der Teilnehmer an der Konferenz gruppenweise in einem zweiten Komparator CFC miteinander verglichen. Aufgrund dieses Vergleiches gibt der Komparator CFC Steuerungsbits, sogenannte Dämpfungsbits ab, die an eine Dämpfungssteuerung LFL übermittelt und dort zwischengespeichert werden. Von dort werden die Dämpfungsbits einem ersten Codewandler CCL übermittelt, der eine zweifache Funktion ausführt. Zum einen wandelt er die nichtlinear codierten Sprachproben — die durch eine üblicherweise auch als komprimiert bezeichnete Codierung des analogen Sprachsignals erzeugt worden sind — in linear codierte Sprachproben um, wie sie für eine verzerrungsfreie Addition erforderlich sind. Die nichtlinear codierten PCM-Worte bestehen, wie bereits erwähnt, aus 8 Bits, während die linear codierten Sprachproben aus jeweils 13 Bits bestehen. Dies ist in Figur 1 auch durch die Anzahl der Leiterpaare angedeutet, aus denen die jeweils die verschiedenen Schaltungsteile verbindenden Leitungen bestehen. Von dem Sprachprobenspeicher SSM gelangen die komprimierten Sprachproben über eine Achtfach-Leitung zu dem ersten Codewandler CCL, während sie diesen als linear codierte Sprachproben auf 13 Leiterpaaren verlassen. Über ein eingangsseitiges Leiterpaar wird dem Codewandler CCL das Dämpfungsbit zugeführt.

In dem Codewandler CCL werden zum anderen sämtliche Sprachproben außer der des lautesten Teilnehmers gedämpft. In einem Ausführungsbeispiel ist eine Dämpfung von 12 dB gewählt worden, es können aber ohne weiteres andere Dämpfungen eingefügt werden. Der Codewandler CCL ist als PROM-Baustein ausgeführt und es ist somit einfach, einen anderen Dämpfungswert vorzusehen. Welche Sprachproben bedämpft und welche nicht bedämpft werden, wird durch das Dämpfungsbit festgelegt, das jeweils in der Dämpfungssteuerung LFL gesetzt ist.

Das Aufsummieren der Ergebnisse der in dem ersten Komparator CFS durchgeführten Vergleiche der Sprachproben in den den einzelnen Teilnehmern zugeordneten Zählern CNT und die Ausführung dieser Zähler ergibt eine erste zeitliche Integration der zu bewertenden Sprachproben. Um ein zu häufiges, durch Augenblickswerte gesteuertes Umschalten der Dämpfungen zu verhindern, werden die Zählerstände in dem zweiten Komparator CFC nicht in jedem sondern nur in jedem vierten Rahmen verglichen. Dies ergibt eine zweite zeitliche Integration der Sprachprobenbewertung.

Von dem ersten Codewandler CCL gelangen die aufeinanderfolgenden Sprachproben der Konferenzteilnehmer und die zugehörigen Dämpfungsbits zu einer Addierschaltung ADD, in der sie zu dem Summensignal aufsummiert werden. Sie werden zu diesem Zweck nach jeder Einzeladdition in einem Akkumulator ACC zwischengespeichert.

Nach Vollenden der Addition gelangen die Sprachproben zu einem zweiten Codewandler LCC, in dem sie wieder in nichtlinear codierte Sprachproben umgesetzt werden, die über acht Leitungspaare zu einem Parallel/Seriell-Wandler PSC gelangen. Von diesem verlassen die PCM-Worte die erfindungsgemäße Konferenzschaltung in serieller Form über die Leitung TX, und zwar gelangen sie über die entsprechende Anschalteeinheit zu dem Koppelnetz und von dort zu den Fernsprechteilnehmern.

Zwischen den in der Konferenzschaltung ankommenden PCM-Kanälen und den aus ihr abgehenden Kanälen ergibt sich ein zeitlicher Versatz von 6 Kanälen, d. h. von etwa 24 µs.

Mit der erfindungsgemäßen Konferenzschaltung kann auch das Aufschalten durchgeführt werden, bei dem sich, z. B. in einer Nebenstellenanlage, entweder der Rufer auf den besetzt gefundenen Anschluß des Gerufenen aufschaltet oder eine Bedienungsperson zum Ankündigen einer Verbindung aus dem öffentlichen Netz in eine bestehende Fernsprechverbindung eintritt.

Über die Protokollbits, die wie erwähnt in der Unterdrückungsschaltung SIC ausgewertet werden, können weitere Informationen übermittelt und ausgewertet werden. Ein Beispiel dafür ist der Hinweis auf eine sehr lange Teilnehmerleitung, die in der Vermittlungsstelle ja bekannt ist, und der dazu verwendet wird, die Sprachproben des betreffenden Teilnehmers einer geringeren Dämpfung zu unterwerfen.

Aus Figur 2 ist eine Ablaufsteuerung ROC ersichtlich, die 4-MHz- und 8-KHz-Signale sowie Rahmensynchronisiersignale FSYNC empfängt und Steuersignale CS erzeugt, die den einzelnen Schaltungsteilen der erfindungsgemäßen Konferenzschaltung zugeführt werden, um dort den zeitlichen Ablauf der Verarbeitungsvorgänge zu steuern. Die von der Ablaufsteuerung ROC zu den verschiedenen Schaltungsteilen führenden Steuerleitungen sind nicht im einzelnen dargestellt, da sie die Zeichnung unübersichtlich machen würden.

Dadurch, daß in der erfindungsgemäßen Konferenzschaltung alle Sprachproben außer einer bedämpft werden, bevor sie summiert werden, verringern sich das Ausmaß und die Wahrscheinlichkeit einer Amplitudenüberschreitung des Sprachsummensignals ganz erheblich.

**Patentansprüche**

1. Verfahren zum Herstellen einer Konferenzverbindung in einer digitalen Fernsprechvermittlungsanlage, wobei die nichtlinear codierten sprachproben in linear codierte Sprachproben umgesetzt, addiert und anschließend wieder in nichtlinear codierte Sprachproben umgesetzt werden, dadurch gekennzeichnet, daß die von den verschiedenen Teilnehmern der Konferenzverbindung stammenden Sprachproben zeitlich integriert werden, in dem in einem ersten Komparator (CFS) die einzelnen Sprachproben untereinander verglichen und anhand des Vergleichsergebnisses ein dem Lautesten Teilnehmer zugeordneten Zähler (CNT) um eins erhöht wird, und daß den restlichen Teilnehmern zugeordnete zähler (CNT) um eins erniedrigt werden, daß in einem zweiten nachgeschalteten Komparator (CFC) die Zählerstände der einzelnen Sprachproben miteinander verglichen werden und ein den lautesten Teilnehmer kennzeichnendes Ausgangssignal erzeugt wird, und daß die die höchste Intensität aufweisende Sprachprobe unbedämpft und die restlichen Sprachproben um einen vorgebbaren, von der Anzahl der Teilnehmer unabhängigen Wert bedämpft der Addition zugeführt werden.

2. Verfahren nach Anspruch 1, dadurch gekennzeichnet, die Sprachproben jeweils erst nach einer vorgegebenen Anzahl Zeitvielfachrahmen miteinander verglichen werden.

3. Verfahren nach Anspruch 1 oder 2, dadurch gekennzeichnet, daß erst nach jeweils einer vorgegebenen Anzahl Zeitvielfachrahmen von der unbedämpften Weitergabe der Sprachproben eines Teilnehmers auf die unbedämpfte Weitergabe der Sprachproben eines anderen Teilnehmers umgeschaltet wird.

4. Verfahren nach einem der vorhergehenden Ansprüche, dadurch gekennzeichnet, daß der vorgegebene Dämpfungswert 12 dB beträgt.

5. Schaltungsanordnung zur Durchführung des Verfahrens nach Anspruch 1, die zum Herstellen einer Konferenzverbindung in einer digitalen Fernmeldevermittlungsanlage einen ersten Codewandler (CCL) aufweist, durch den die einzelnen von den Teilnehmern stammenden nichtlinear codierten Sprachproben in linear codierte Werte umgewandelt werden, mit einer die umgewandelten Werte miteinander summierenden Addierschaltung (ADD), sowie mit einem die Summenwerte in nichtlinear codierte Sprachproben umwandelnden zweiten Codewandler (LLC), dadurch gekennzeichnet, daß die Schaltungsanordnung eine Bewertungsschaltung (EVC) aufweist, die einen die ankommenden Sprachproben vergleichenden ersten Komparator (CFS) sowie einen Zähler (CNT) für jeden der Teilnehmer aufweist und die einen den Zählern (CNT) nachgeschalteten zweiten Komparator (CFC) enthält, so daß die ankommenden Sprachproben über eine Integrationszeit derart bewertet werden, daß der Konferenzteilnehmer mit der höchsten Sprachsignalintensität ermittelt wird, und daß dessen Sprachproben unbedämpft und die Sprachproben der anderen Teilnehmern um einen vorgebbaren, von der Anzahl der Teilnehmer unabhängigen Wert bedämpft der Addierschaltung zugeführt werden.

6. Schaltungsanordnung nach Anspruch 5, dadurch gekennzeichnet, daß die Zähler (CNT) derart dimensioniert sind, daß ein Teilnehmer nach einem Wechsel des aktiven Sprechers nach maximal 4ms als der lauteste festgestellt wird.

7. Schaltungsanordnung nach Anspruch 5 oder 6, dadurch gekennzeichnet, daß das Ausgangssignal des zweiten Komparators (CFS) einer Dämpfungssteuerung (LFL) zugeführt wird, die an den ersten Codewandler (CCL) ein Steuersignal abgibt, aufgrund dessen die dort jeweils umgewandelte Sprachprobe bedämpft oder nicht bedämpft wird.

8. Schaltungsanordnung nach einem der Ansprüche 5 bis 7, dadurch gekennzeichnet, daß durch den zweiten Komparator (CFC) die Zählerstände jeweils nach vier Zeitvielfachrahmen verglichen werden.

9. Schaltungsanordnung nach einem der Ansprüche 5 bis 8, dadurch gekennzeichnet, daß sie mit einer Unterdrückungsschaltung (SIC) versehen ist, durch die anhand einer Prüfung von Bitformaten unbelegte Kanäle erkannt und unterdrückt werden.

**Claims**

1. Method of setting up a conference circuit in a digital telephone exchange, in which the non-linearly-coded speech samples are converted into linearly-coded speech samples, added together and then converted back into non-linearly coded speech samples, characterized in that the speech samples from the different participants in the conference circuit are chronologically integrated, the individual speech samples being compared with each other in a first comparator (CFS) and, on the basis of the result of the comparison, a counter (CNT) assigned to the loudest participant being raised by one and that counters (CNT) assigned to the other participants are lowered by one, that in a second comparator (CFC) connected thereafter the counter readings of the individual speech samples are compared with each other and an output signal characterizing the loudest participant is produced, and that the speech sample showing the highest intensity is passed to the addition unattenuated and the remaining speech samples are passed to the addition attenuated by a presettable value independent of the number of participants.

2. A method as claimed in Claim 1, characterized in that the speech samples are in each case compared with each other only after a preset number of time division multiplex frames.

3. A method as claimed in either one of Claims 1 or 2, characterized in that, in each case, the switching over from the unattenuated transmission of the speech samples of one participant to the unattenuated transmission of the speech samples of another participant takes place only after a preset number of time division multiplex frames.

4. A method as claimed in any one of the preceding Claims, characterized in that the preset attenuation value is 12 dB.

5. A circuit arrangement for implementation of the method as claimed in Claim 1, which, for the purpose of setting up a conference circuit in a digital telecommunication system, includes a first code converter (CCL) by which the individual non-linearly-coded speech samples from the participants are converted into linearly-coded values, with a summating adding circuit (ADD) which adds the converted values together, and also with a second code converter (LLC) which converts the sum values into non-linearly-coded speech samples, characterized in that the circuit arrangement contains an evaluation circuit (EVC) which comprises a first comparator (CFS) which compares the incoming speech samples and a counter (CNT) for each of the participants and also a second comparator (CFC) connected behind the counters (CNT), so that the incoming speech samples are evaluated during an integration period in such a way that the conference participant with the highest speech signal intensity is ascertained, and that that participant's speech samples are passed to the adding circuit unattenuated and that the speech samples of the other participants are passed to the adding circuit attenuated by a presettable value independent of the number of participants.

6. A circuit arrangement as claimed in Claim 5, characterized in that the counters (CNT) are so dimensioned that, after a change of the active speaker, a participant is ascertained as being the loudest after not more than 4ms.

7. A circuit arrangement as claimed in Claim 5 or 6, characterized in that the output signal of the second comparator (CFS) is passed to an attenuation control (LFL) which emits a control signal to the first code converter (CCL), on the basis of which signal the speech sample converted there in each case is attenuated or not attenuated.

8. A circuit arrangement as claimed in any one of Claims 5 to 7, characterized in that the second comparator (CFC) in each case compares the counter readings after four time division multiplex frames.

9. A circuit arrangement as claimed in any one of Claims 5 to 8, characterized in that it is provided with a suppression circuit (SIC) which, on the basis of a checking of bit formats, recognises and suppresses unoccupied channels.

**Revendications**

1. Méthode d'établissement d'appels de conférence dans un système de commutation téléphonique numérique, dans lequel les échantillons de parole codés non linéairement sont convertis en échantillons de parole codés linéairement, qui sont additionnés, puis reconvertis en échantillons de parole codés non linéairement, caractérisée en ce que les échantillons de parole provenant des différents participants à la conférence sont intégrés en fonction du temps, les échantillons de parole individuels sont comparés les uns aux autres dans un premier comparateur (CFS) et, sur la base du résultat de la comparaison, un compteur (CNT) affecté au participant dont la voix est la plus forte est incrémenté d'une unité, tandis que les compteurs (CNT) affectés aux autres participants sont décrémentés d'une unité, en ce qu'un deuxième comparateur (CFC), connecté ensuite, compare entre elles les valeurs de comptage des échantillons de parole individuels et produit un signal de sortie identifiant le participant dont la voix est la plus forte, et en ce que l'échantillon de parole ayant la plus grande amplitude est additionné sans atténuation, tandis que les autres échantillons de parole sont additionnés après une atténuation de valeur prédéterminée, indépendante du nombre des participants.

2. Méthode conforme à la revendication 1, caractérisée en ce que les échantillons de parole ne sont comparés qu'après un nombre déterminé de trame du multiplexage temporel.

3. Méthode conforme à la revendication 1 ou 2, caractérisée en ce que le passage du transfert non atténué des échantillons de parole d'un participant au transfert non atténué des échantillons de parole d'un autre participant ne se produit qu'après un nombre déterminé de trame du multiplexage temporel.

4. Méthode conforme à l'une quelconque des revendications précédentes, caractérisée en ce que ladite valeur prédéterminée de l'atténuation est égale à 12 dB.

5. Arrangement de circuits pour la mise en œuvre de la méthode conforme à la revendication 1, pour l'établissement d'appels de conférence dans un système de commutation téléphonique numérique, comportant un premier convertisseur de code (CCL) transformant les échantillons de parole codés non linéairement provenant de chaque participant en valeurs codées linéairement, un additionneur (ADD) additionnant les valeurs converties et un deuxième convertisseur de code (LCC) transformant les valeurs additionnées en échantillons codés non linéairement, caractérisé en ce qu'il comprend un circuit d'évaluation (EVC) qui comporte un premier comparateur (CFS) comparant les échantillons de parole d'entrée, ainsi qu'un compteur (CNT), pour chacun des participants, et qui comprend un deuxième comparateur (CFC) suivant les compteurs (CNT), de sorte que les échantillons de parole d'entrée y sont évalués durant un temps d'intégration, le participant fournissant les signaux de parole de la plus grande amplitude est déterminé et que les échantillons de parole de celui-ci sont fournis à l'additionneur sans atténuation, tandis que les échantillons de parole des autres participants le sont avec une atténuation d'une valeur prédéterminée, indépendante du nombre des participants.

6. Arrangement de circuits conforme à la revendication 5, caractérisé en ce que les compteurs (CNT) sont dimensionnés de manière que, après une modification parmi les participants actifs, un participant dont la voix est la plus forte soit identifié en 4 ms au plus.

7. Arrangement de circuits conforme à la revendication 5 ou 6, caractérisé en ce que le signal de sortie du deuxième comparateur (CFS) est appliqué à un contrôleur d'atténuation (LFL) qui adresse au premier convertisseur de code (CCL) un signal de commande qui fait en sorte que chaque échantillon de parole converti soit atténué ou non.

8. Arrangement de circuits conforme à l'une quelconque des revendications 5 à 7, caractérisé en ce que le deuxième comparateur (CFC) compare les contenus des compteurs toutes les quatre trames du multiplexage temporel.

9. Arrangement de circuits conforme à l'une quelconque des revendications 5 à 8, caractérisé en ce qu'il comprend un circuit de suppression (SIC) qui détecte les voies non utilisées en vérifiant les formats binaires et les élimine du traitement.

Fig.1

Fig.2

0 081 799